# EUROPEAN PATENT APPLICATION

(11) **EP 4 848 085 A1**
(43) Date of publication of application: **02.12.2026**
(21) Application number: 26180346.4
(22) Date of filing: 21.05.2026
(51) Int. Cl.: G06F 9/455, G06F 8/30, G06F 9/451, G06F 21/53, G06F 40/18, G06N 3/0475

(54) **ISOLATED GENERATION OF SCRIPT PREVIEWS FOR SPREADSHEET APPLICATIONS**

(30) Priority: 30.05.2025 US 202519224294
(71) Applicant: Microsoft Technology Licensing, LLC, Redmond, WA 98052 (US)
(72) Inventor: KOTA, Gergely Zsolt, Redmond, 98052 (US); DUMITRU, Ion Viorel, Redmond, 98052 (US); KEREN, Or, Redmond, 98052 (US); ANTAKI, Gil, Redmond, 98052 (US); AZARIA, Raz, Redmond, 98052 (US); TUPAJ, Konrad Pawel, Redmond, 98052 (US); GOICOCHEA HOEFKEN, Arturo, Redmond, 98052 (US); ZHENG, Qiwei, Redmond, 98052 (US); RYAN, Nicholas Kyle, Redmond, 98052 (US); SULLIVAN, Kathrin Veronica Jean, Redmond, 98052 (US); SONINO, Shahar, Redmond, 98052 (US); LEE, Jason Chieh, Redmond, 98052 (US)
(74) Representative: CMS Cameron McKenna Nabarro Olswang LLP

(57) **Abstract**

A method implemented by one or more computing devices includes identifying a script associated with a spreadsheet hosted in a runtime environment. The method further includes executing the script in a simulation environment, isolated from the runtime environment, to produce a simulated outcome. The simulated outcome includes one or more changes to an isolated instance of the spreadsheet hosted in the isolated environment. The method further involves generating a preview based at least on the simulated outcome and causing display of the preview of the script. The preview may include, for example, a representation of at least one of the changes to the isolated instance of the spreadsheet

## Description

### TECHNICAL FIELD

Aspects of the disclosure are related to the field of computer hardware and software, and in particular, to previewing script outcomes in the context of spreadsheets.

### BACKGROUND

In the domain of spreadsheet applications, users frequently depend on scripts - whether generated by Large Language Models (LLMs) or manually authored - to automate tasks, manipulate data, and boost productivity. These scripts are executed through the script engines embedded within the spreadsheet software, which interpret and run the code to perform various functions. However, the direct execution of these scripts can present significant risks.

Scripts may inadvertently alter data, delete crucial information, or cause unforeseen changes that are challenging to reverse. For instance, a script intended to clean up data might accidentally delete important records or modify values incorrectly, leading to data corruption. The script engines, while powerful, do not inherently safeguard against such unintended side effects, making it essential for users to thoroughly understand the scripts they run.

Additionally, executing scripts from unverified sources or those generated by LLMs without a thorough understanding of their impact can expose systems to malicious code or vulnerabilities. This security concern is compounded by the fact that users may not always have the expertise to evaluate the safety of a script. Consequently, due to these risks, users may be hesitant to leverage scripting capabilities, thereby impeding productivity and the adoption of advanced features within spreadsheet applications.

### SUMMARY

Technology disclosed herein mitigates the risks associated with executing scripts in spreadsheet applications by running the scripts in an isolated simulation environment, generating a preview of the changes, and displaying this preview to the user. This approach prevents unintended side effects, enhances security, and reduces user hesitation by allowing users to review the impact of scripts before applying them to the actual spreadsheet.

In various embodiments, a method implemented by one or more computing devices includes identifying a script associated with a spreadsheet hosted in a runtime environment. The method further includes executing the script in a simulation environment, isolated from the runtime environment, to produce a simulated outcome. The simulated outcome includes one or more changes to an isolated instance of the spreadsheet hosted in the isolated environment. The method further involves generating a preview based at least on the simulated outcome and causing display of the preview of the script. The preview may include, for example, a representation of at least one of the changes to the isolated instance of the spreadsheet.

This Overview is provided to introduce a selection of concepts in a simplified form that are further described below in the Detailed Description. It may be understood that this Overview is not intended to identify key features or essential features of the claimed subject matter, nor is it intended to be used to limit the scope of the claimed subject matter.

### BRIEF DESCRIPTION OF THE DRAWINGS

Many aspects of the disclosure may be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
Figure 1 illustrates a computing environment in an implementation.
Figure 2 illustrates a script preview process in an implementation.
Figure 3 illustrates an operational scenario in an implementation.
Figure 4 illustrates an application architecture in an implementation.
Figure 5 illustrates a service architecture in an implementation.
Figure 6 illustrates an operational scenario in an implementation.
Figure 7 illustrates an operational scenario in an implementation.
Figures 8A-8E illustrate a user experience in an implementation.
Figure 9 illustrates a computing system suitable for implementing the various operational environments, architectures, processes, scenarios, and sequences discussed below with respect to the other Figures.

### DETAILED DESCRIPTION

In the realm of spreadsheet applications, users often rely on scripts-either generated by Large Language Models (LLMs) or authored manually-to automate tasks, manipulate data, and enhance productivity. However, executing these scripts directly can pose significant risks, including unintended side effects, security concerns, and user hesitation. Scripts may alter data incorrectly, delete important information, or cause unforeseen changes that are difficult to reverse. Running scripts from unverified sources or generated by LLMs without understanding their impact can expose systems to malicious code or vulnerabilities. Due to these risks, users may be reluctant to utilize scripting capabilities, hindering productivity and adoption of advanced features.

Usage scenarios include leveraging an AI assistant to generate a script that cleans up data entries in a spreadsheet, where the user wants to ensure it behaves as intended without corrupting their data, or an analyst writing a custom script to calculate financial projections but is unsure if there are logical errors that could lead to incorrect results.

The proposed solution is a sandboxed execution and preview system integrated into the spreadsheet application. It enables scripts to be executed in a simulated environment that mirrors the actual spreadsheet, allowing users to see the potential outcomes without affecting real data. Scripts are run in an isolated environment that replicates the spreadsheet's state, preventing any changes from impacting the actual spreadsheet or system resources. For both LLM-generated and user-generated scripts, the execution engine processes the code within the sandbox, handling all typical operations (cell updates, formula calculations) while intercepting and safely managing potentially harmful operations (e.g., network calls, file access). After execution, the system generates a visual preview showing the differences between the original and modified spreadsheet. Changes are highlighted, and users can navigate through them to understand the script's impact fully. The sandbox restricts potentially dangerous operations, ensuring that scripts cannot perform unauthorized actions, and includes checks for known vulnerabilities or malicious patterns within scripts.

Various technical effects may be appreciated from the implementations disclosed herein. For example, enhanced safety and trust are achieved as users can explore the effects of scripts without risking data integrity, promoting trust in using scripts from various sources. Increased productivity is fostered by reducing the fear of unintended consequences, making users more likely to leverage scripting capabilities to automate tasks. The sandbox environment provides an added layer of control, particularly useful for scripts generated by LLMs, where users may have limited understanding of the code. This ensures safer experimentation and fosters trust in AI-generated outputs. The interactive preview helps users comprehend complex scripts, especially those generated by LLMs, bridging the gap between AI outputs and user expectations. Sandboxing and operational restrictions mitigate the risk of running malicious code, safeguarding user data and system resources.

Existing solutions in the technical field include macro recording and execution capabilities, script editors, third-party add-ons and extensions, and AI-powered assistants. Unlike traditional macro recording and script editors, the proposed solution introduces a sandboxed execution environment that replicates the spreadsheet's state, allowing scripts to be executed without affecting the actual data, mitigating unintended side effects and security concerns. The execution engine processes both LLM-generated and user-generated scripts within the sandbox, handling typical operations like cell updates and formula calculations while intercepting and safely managing potentially harmful operations such as network calls and file access. After execution, the system generates a visual preview showing the differences between the original and modified spreadsheet, providing a clear and intuitive way for users to validate the outcome of their scripts before applying them to real data. The sandbox restricts potentially dangerous operations, ensuring that scripts cannot perform unauthorized actions, and includes checks for known vulnerabilities or malicious patterns within scripts, providing an additional layer of security.

Additional technical effects may be appreciated. For instance, the sandboxed execution environment ensures users can safely test and validate scripts without risking their real data. The simulation and interception of harmful operations, which ensures scripts cannot perform unauthorized actions, enhance security and reliability. The visual preview of script execution helps users understand the impact of their scripts and builds confidence in using scripting capabilities. Lastly, integrated security measures ensure the sandboxed execution environment remains secure and trustworthy.

In various implementations, a computer-implemented method involves identifying a script associated with a spreadsheet hosted in a runtime environment and executing the script in a simulation environment, isolated from the runtime environment, to produce a simulated outcome. The simulated outcome includes one or more changes to an isolated instance of the spreadsheet hosted in the isolated environment. Based on the simulated outcome, a preview is generated, which includes a representation of at least one of the changes to the isolated instance of the spreadsheet. The preview of the script is then displayed.

Identifying the script may involve receiving a request for the preview of the script, which can be either user-generated or generated by an artificial intelligence (AI) assistant. Alternatively, identifying the script may involve receiving a request to generate the script, followed by sending a prompt to a language model to generate the script.

Additionally, the method includes sending a prompt to a language model to generate suggestions for modifying the script and incorporating these suggestions into the preview. The prompt may task the language model with reviewing the changes to the isolated instance of the spreadsheet for potentially negative outcomes, and the preview includes a representation of at least one of these potentially negative outcomes.

Executing the script in the simulation environment involves executing allowed operations expressed in the script while blocking disallowed operations expressed in the script. Allowed operations include cell updates and formula calculations, whereas disallowed operations include network calls and file access operations.

Various implementations define one or more computer readable storage media having program instructions stored thereon that, when executed by one or more processors of a computing apparatus, direct the computing apparatus to at least: identify a script associated with a spreadsheet hosted in a runtime environment; execute the script in a simulation environment, isolated from the runtime environment, to produce a simulated outcome, wherein the simulated outcome includes one or more changes to an isolated instance of the spreadsheet hosted in the isolated environment; generate a preview based at least on the simulated outcome, wherein the preview includes a representation of at least one of the one or more changes to the isolated instance of the spreadsheet; and cause display of the preview of the script.

To identify the script, the program instructions may direct the computing apparatus to receive a request for the preview of the script, wherein the script comprises one of a user-generated script and an artificial intelligence (AI) assistant-generated script. Alternatively, to identify the script, the program instructions direct the computing apparatus to receive a request to generate the script, and wherein the program instructions further direct the computing apparatus to send prompt to a language model to generate the script.

The program instructions may further direct the computing apparatus to send a prompt to a language model to generate one or more suggestions for modifying the script and include the one or more suggestions in the preview. The prompt may task the language model with reviewing the one or more changes to the isolated instance of the spreadsheet for potentially negative outcomes and wherein preview includes a representation of at least one of the potentially negative outcomes.

To execute the script in the simulation environment, the program instructions may direct the computing apparatus to executing allowed operations expressed in the script and block disallowed operations expressed in the script.

Various implementations define a computing apparatus comprising: one or more computer readable storage media; one or more processors operably coupled with the one or more computer readable storage media; and program instructions stored on the one or more computer readable that, when executed by the one or more processors, direct the computing apparatus to at least: identify a script associated with a spreadsheet hosted in a runtime environment; execute the script in a simulation environment, isolated from the runtime environment, to produce a simulated outcome, wherein the simulated outcome includes one or more changes to an isolated instance of the spreadsheet hosted in the isolated environment; generate a preview based at least on the simulated outcome, wherein the preview includes a representation of at least one of the one or more changes to the isolated instance of the spreadsheet; and cause display of the preview of the script.

To identify the script, the program instructions may direct the computing apparatus to receive a request for the preview of the script, wherein the script comprises one of a user-generated script and an artificial intelligence (AI) assistant-generated script. Alternatively, to identify the script, the program instructions may direct the computing apparatus to receive a request to generate the script, and wherein the program instructions further direct the computing apparatus to send prompt to a language model to generate the script.

The program instructions may further direct the computing apparatus to send a prompt to a language model to generate one or more suggestions for modifying the script and include the one or more suggestions in the preview. The prompt may task the language model with reviewing the one or more changes to the isolated instance of the spreadsheet for potentially negative outcomes and wherein preview includes a representation of at least one of the potentially negative outcomes.

To execute the script in the simulation environment, the program instructions may direct the computing apparatus to executing allowed operations expressed in the script and block disallowed operations expressed in the script. The allowed operations include cell updates and formula calculations, and wherein the disallowed operations include network calls and file access operations.

Various implementations define a method implemented by one or more computing devices includes identifying a script associated with a spreadsheet hosted in a runtime environment. The method further includes executing the script in a simulation environment, isolated from the runtime environment, to produce a simulated outcome. The simulated outcome includes one or more changes to an isolated instance of the spreadsheet hosted in the isolated environment. The method further involves generating a preview based at least on the simulated outcome and causing display of the preview of the script. The preview may include, for example, a representation of at least one of the changes to the isolated instance of the spreadsheet.

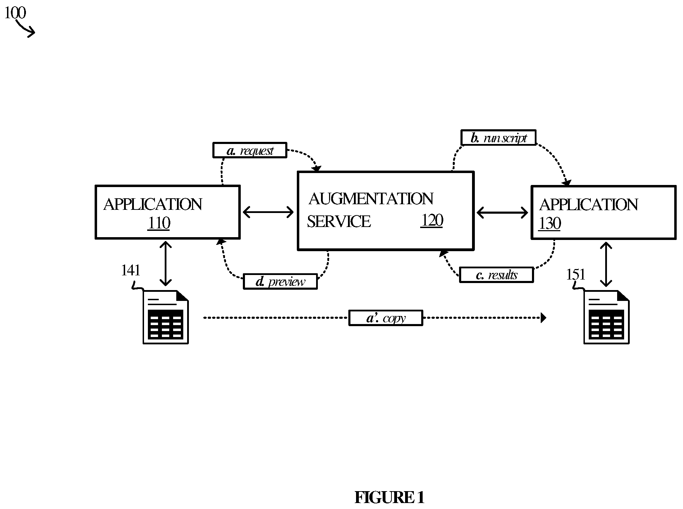

Figure 1 illustrates system 100 in an implementation. System 100 includes application 110, augmentation service 120, and application 130. Application 110 communicates with augmentation service 120 to obtain suggestions for enhancing content such as spreadsheet 141. Augmentation service 120 communicates with application 130 to obtain previews of such suggestions, which it may then return to application 110 for a user's consideration.

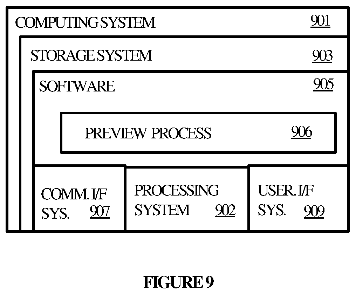

Application 110, augmentation service 120, and application 130 may each be implemented in computing software on a suitable computing device or devices (e.g., computing device 901 in Figure 9) either separately or in an integrated manner. For example, application 110 may be implemented on a user device such as a mobile phone, laptop, or similar device. Augmentation service 120 may be implemented on computing equipment remote from application 110, on the same device as application 110, or distributed across both. Application 130 may be implemented locally or remotely with respect to augmentation service 120.

Application 110 is representative of productivity software having a script engine capable of executing scripts suggested by augmentation service 120. Examples include spreadsheet applications, word processing applications, email applications, business applications, and the like. Application 130 is also representative of productivity software but is implemented in an isolated manner with respect to application 120, allowing it to execute scripts provided by augmentation service 120. Augmentation service 120 is representative of one or more software components capable of coordinating various types of data and services across different applications. In particular, augmentation service 120 enhances the capabilities of application 110 by integrating advanced language models and other tools to provide meaningful and contextually relevant scripts.

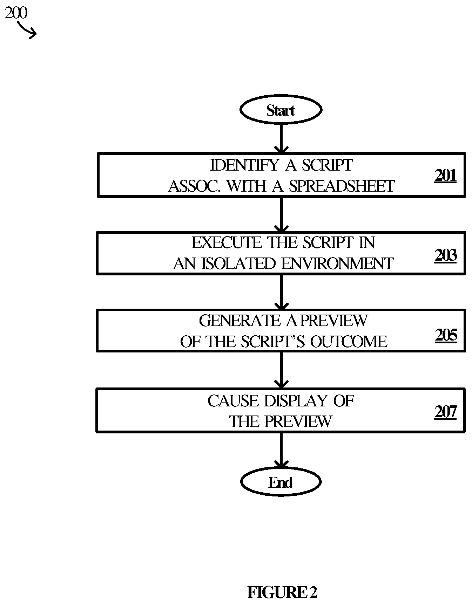

Augmentation service 120, in cooperation with application 110 and application 130, employs a preview process 200 illustrated in Figure 2 to suggest scripts and provide preview of the scripts to application 110. Preview process 200 may be implemented in program instructions in the context of the software and/or firmware elements of augmentation service 120. The program instructions, when executed by one or more processing devices of one or more suitable computing devices, direct the one or more computing devices to operate as follows, referring to the steps of Figure 2 and to a computing device in the singular for the sake of clarity.

In operation, the computing device identifies a script associated with a spreadsheet hosted by an application in a runtime environment (Step 201). This may involve, for example, generating a script in response to a user request from the application to do so, receiving a user-generated script from the application, or otherwise obtaining a script associated with the spreadsheet.

Next, the computing device executes the script in a simulation environment, isolated from the runtime environment of the application, to produce a simulated outcome (Step 203). This step ensures that the script runs in a controlled, separate environment, mimicking the runtime environment but without affecting the live spreadsheet. The script's changes are applied to a copy of the spreadsheet within this sandbox, allowing the original spreadsheet to remain unaffected while assessing the script's impact.

The computing device then generates a preview based on the simulated outcome (Step 205). The preview may include a representation of the changes made to the isolated instance of the spreadsheet. The changes may be indicated in a visual and/or textual manner that the computing device causes to be displayed in a user interface (Step 207) such as by sending the preview to the application, for the application to display locally, by interfacing with operating system components to display the preview locally or otherwise facilitating the display of the preview for user consideration.

The preview may be accompanied by the suggested script, as well as a button or other such user interface component selectable by a user to execute the script locally and thereby affect the changes in the preview. Selecting the button may cause the application to execute the script locally with respect to the original copy of the spreadsheet.

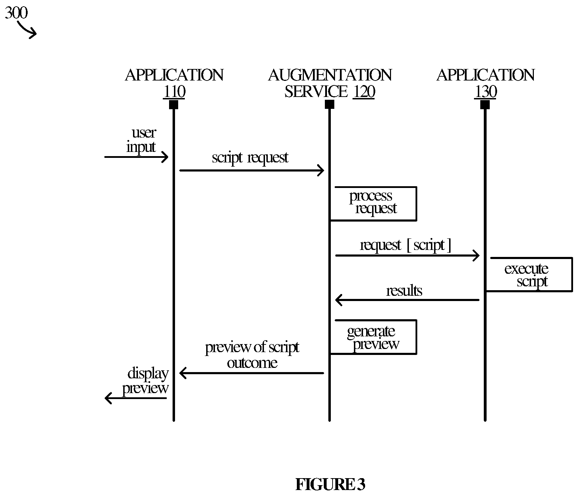

Figure 3 illustrates operational scenario 300, which depicts an application of preview process 200 with respect to the elements system 100 in Figure 1. In operation, a user engaged with application 110 supplies user input to application 110, in response to which application submits a request to augmentation service 120 for a suggested script. The user input may be, for example, natural language input describing a request for application 110 to improve some aspect of spreadsheet 141, in which case the request would be a request for augmentation service 120 to generate or otherwise obtain script suitable for carrying out the task. The user input may be supplied by way of a keyboard interface, a voice-to-text interface, or any other suitable mechanism for receiving user input and interfacing with application 110.

Alternatively, the user may desire a preview of a user-generated script, in which case the user input may cause application 110 to submit a request (along with the user-generated script) for augmentation service 120 to create the preview. The user input in this example may be a selection of a button, menu item, or other such user interface component, natural language input supplied by keyboard, voice interface, or the like, or any other suitable mechanism for interfacing with application 110.

Augmentation service 120 receives the script request - submitted by application 110 in the context of either scenario outlined above - and processes it accordingly. In the first case, when the request is for a script suggestion, augmentation service 120 may communicate with a foundation language model and/or other types of generative artificial intelligence tools to obtain a script. In the second case, augmentation service 120 has the user-generated script in its possession since it was provided by application 110. Augmentation service 120 then proceeds to instruct, call into, or otherwise make a request of application 130 to execute the script with respect to a copy of spreadsheet 141, represented by spreadsheet 151 in Figure 1.

Application 130 executes the script in the context of its script engine. The script engine interprets the code in the script, translating the code to one or more corresponding operations, and calls back to the relevant component(s) of application 130 that perform the operations on spreadsheet 151. The results may be read by augmentation service 120, which processes them to generate the requested preview. Augmentation service 120 replies to application 110 with the preview of the script outcome, which application 110 may display for the user's consideration. The user may then decide whether to move forward with script (having it executed locally by the script engine of application 110), modify the script, abort the script, request changes to the script, or otherwise.

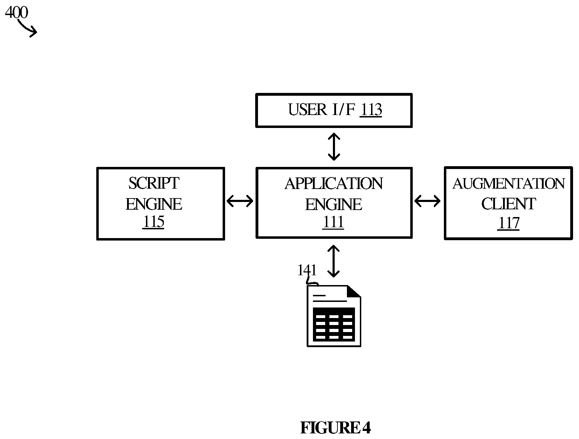

Figure 4 illustrates a software architecture 400 for implementing application 110 at a very high level (and optionally, application 130). Software architecture 400 includes application engine 111, user interface 113, script engine 115, and augmentation client 117.

Application engine 111 represents one or more components responsible for managing the primary functions and operations of application 110. For example, application engine 111 handles data processing, performs calculations, and ensures the overall system performance is efficient and reliable. Application engine 111 may interact with operating system components such as memory management and CPU scheduling components to allocate resources and execute task.

User interface 113 provides the visual and interactive elements that allow users to interact with application 110. User interface 113 includes menus, buttons, and display areas for data input and output. Users may interact with user interface 113 in any manner including by way of mouse input, touch screen gestures, keyboard input, voice input, and the like. User interface 113 receives user input via such input modes and communicates the user input to application engine 111. User interface 113 may interact with the operating system's graphical subsystem and input/output management to render visual elements on the screen and capture user inputs through devices such as the keyboard, mouse, display screen, and the like.

Script engine 115 executes scripts and macros, enabling the automation of tasks and the customization of functionalities within application 110. Script engine 115 allows users to create and run scripts that can streamline workflows and enhance productivity. Script engine 115 may interact with the operating system's file system and process management components to read and write script files, execute processes, and manage script execution.

Augmentation client 117 interfaces with an external augmentation service (e.g., augmentation service 120) to obtain script suggestions. Augmentation client 117 enhances spreadsheets by recommending improvements and optimizations, helping users to refine their data and achieve better results. Augmentation client may interact with the operating system's network stack to communicate with external services, ensuring secure and reliable data transmission.

Communication among and between the elements of software architecture 400 generally occurs through application engine 111 (although in alternative embodiments, the components could communicate directly with each other). Application engine 111 acts as the central hub for communication between all components. It manages data flow and ensures that each component receives the necessary information to perform its tasks. For example, when a user inputs data through user interface 113, application engine processes the data and may trigger scripts in script engine 115 or request suggestions from augmentation client 117.

User interface 113 communicates with application engine 111 to display data and receive user input. When a user performs an action, such as clicking a button or entering data, user interface sends this information to application engine, which then processes the input and updates the display accordingly.

Script engine 115 interacts with application engine to execute scripts and macros. When a script is run, script engine communicates with application engine to access necessary data and perform operations identified in the script. For example, script engine 115 interprets code in the script, resulting in calls into components of application engine 111. The components perform their corresponding operations on the data (e.g., spreadsheet data). Application engine 111 may then update elements of user interface 113 and/or triggers further actions.

In a brief scenario, a user may write a script for script engine 115 to interpret. It is assumed for exemplary purposes that the script specifies desired edits to a spreadsheet, such as changing cell values, formatting, or performing calculations. Script engine 115 reads and interprets the script, parsing the commands in the script and understanding the actions that need to be performed on the spreadsheet.

Using an object interface model, script engine makes object calls to interact with the spreadsheet. These object calls are directed at specific components of the spreadsheet, such as cells, ranges, or worksheets. For example, the script might include a command to change the value of cell A1 to "100". Script engine translates this command into an object call using an object application programming interface (API).

Application engine 111 acts as the central coordinator for performing the operations. It receives the object calls from script engine 115 and ensures that they are executed correctly. Application engine 111 interacts with the operating system's memory management and CPU scheduling components to allocate resources for these operations, such as by scheduling the corresponding functions invoked by the object calls. In this manner, the actions specified in the script are actually implemented at the CPU-level by the execution of a corresponding function's code with respect to the relevant spreadsheet object.

The object calls made by script engine 115 result in changes to the spreadsheet. Application engine 111 updates the spreadsheet's data structure accordingly. For instance, the value of cell A1 is changed to "100" as specified in the script. User interface 113 reflects the changes made to the spreadsheet by interacting with the operating system's graphical subsystem to update the display, showing the new value in cell A1. User interface 113 ensures that the user sees the updated spreadsheet in real-time.

Augmentation client 117 acts as a bridge between the user and external augmentation services (e.g., augmentation service 120), facilitating advanced script generation and optimization. Augmentation client 117 may interface directly with application engine 111, which ensures that augmentation client 117 receives user requests and integrates generated scripts into the software. This allows augmentation client to leverage the application engine's capabilities for resource allocation and task management.

For example, User interface 113 captures user inputs, including natural language requests, and forwards them to application engine. Application engine then passes those requests to augmentation client 117. This interaction ensures that the user's needs are accurately communicated and processed, enabling augmentation client 117 (in cooperating with augmentation service 120) to generate relevant scripts based on the user's input.

Once augmentation client 117 receives a generated script from the external service, it communicates with script engine 115 through application engine 111. Script engine 115 interprets and executes the script, making necessary object calls to the spreadsheet's components. This communication ensures that the scripts are executed efficiently, and the desired changes are applied to the spreadsheet.

Overall, augmentation client 117 is integrated into software architecture 400 in a way that allows it to interact with application engine 111, user interface 113, and script engine 115. This integration enables augmentation client 117 to process user requests, generate scripts, and enhance the spreadsheet, providing a cohesive and optimized user experience.

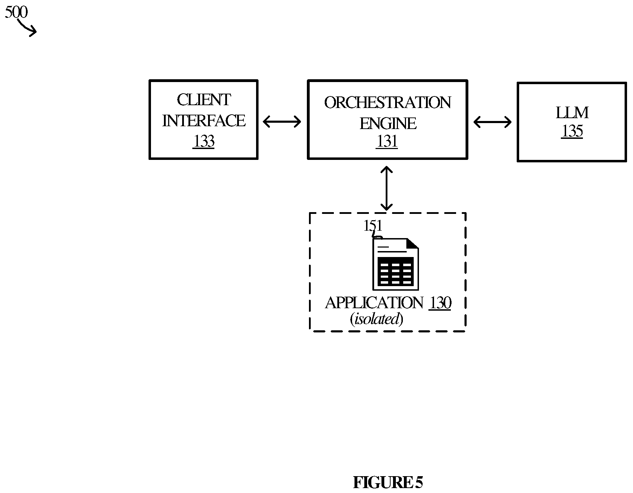

Figure 5 illustrates a software architecture 500 for implementation augmentation service 120 at a very high level. Software architecture 500 includes an orchestration engine 131, a client interface 133, and a large language model (LLM) represented by LLM 135
Client interface 133 acts as a communication bridge between augmentation clients and augmentation service 120, receiving requests such as those for script generation or preview requests and forwarding them to orchestration engine 131 for processing. Client interface 133 ensures secure and efficient communication, allowing an augmentation client to seamlessly interact with the service.

Orchestration engine 131 manages and processes requests forwarded from client interface 133, coordinating the workflow to ensure efficient handling. Orchestration engine 131 generates prompts based on the user's input and sends them to LLM 135 for further processing while also managing the responses from the LLM to ensure they meet the user's needs. Orchestration engine 131 is also capable of interfacing with application 130, which is an isolated instance of application 110 and may optionally be considered part of software architecture 500.

LLM 135 is a large language model designed to enhance the capabilities of software applications by leveraging advanced natural language processing techniques. LLM 135 leverages advanced natural language processing capabilities to interpret the prompts and generate relevant scripts. LLM 135 communicates back to orchestration engine 131, providing detailed and contextually appropriate outputs that are used by orchestration engine 131 to generate a script preview. Examples of LLM 135 include pretrained models such as Generative Pre-Trained Transformers (GPT) (e.g., GPT-4), LLaMA 2, Claude 2, and PaLM 2.

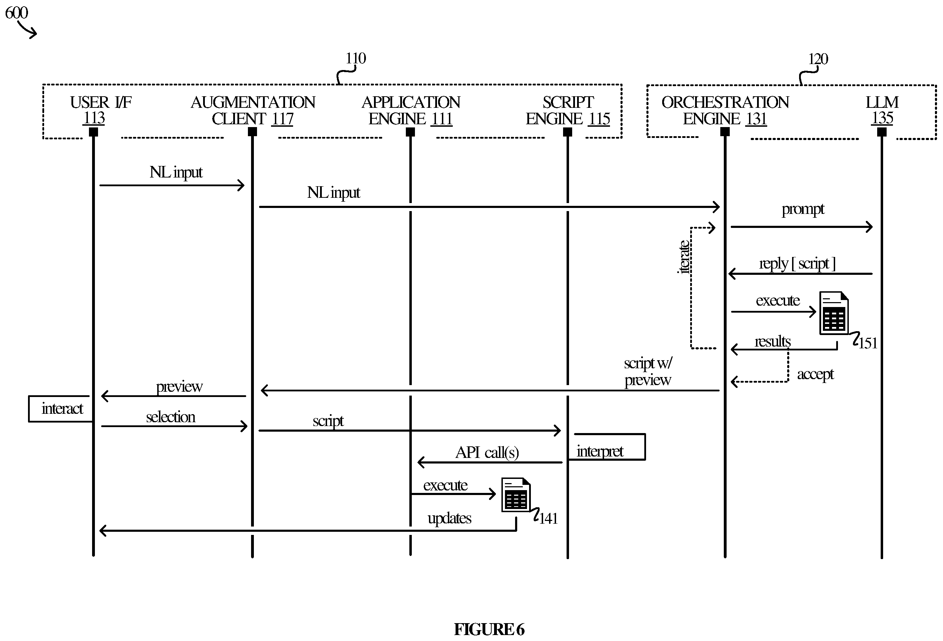

Figure 6 illustrates an operational scenario 600 in an implementation that highlights the integration between the components of application 110 and the components of augmentation service 120. Specifically, operational scenario 600 a use-case whereby a user desires to improve a spreadsheet and interacts with application 110 accordingly.

In this scenario, the user types or otherwise inputs a natural language query into user interface 113, asking for help to improve the spreadsheet. The request is captured by user interface and sent to augmentation client 117. In some cases, user interface 113 may communicate the user input directly to augmentation client 117, while in others, the communication may be facilitated via application engine 111. In either case, augmentation client 110 communicates with orchestration engine 131 (via client interface 133 - not shown) to pass the natural language request. Here too, it may be appreciated that augmentation client 110 may communicate directly with client interface 133 or such communication may be facilitated by application engine 111.

Orchestration engine 131 processes the request, coordinating the workflow and generating prompts based on the user's input. The prompt(s) is (are) sent to LLM 135 to obtain a script suggestion for improving the spreadsheet. LLM 135 processes the prompt(s) and generates a script designed to improve the spreadsheet.

Orchestration engine 131 receives the suggested script from LLM 135 and responsively executes it with respect to spreadsheet 151. That is, orchestration engine 131 interfaces with application 130 in a runtime context that is isolated form that of application 110 and spreadsheet 141. Application 130, leveraging its own script engine, executes the script with respect to spreadsheet 151, and returns the results of orchestration engine 131.

Upon the script having been executed, orchestration engine 131 may iterate one or more times, for example going back to LLM 135 to further enhance the script and/or obtain a different script. Alternatively, or eventually, orchestration engine 131 is satisfied with the suggested script and provides it to augmentation client 117 with a preview of an outcome the script. For example, the preview may include a description of changes made to spreadsheet 151 as a result of the script's execution, including textual descriptions, screen shots, and the like.

Augmentation client 117 interacts with user interface 113 to display the preview, either directly or through application engine 111. The user can review the preview and decide whether to proceed with the suggested improvements. If the user chooses to execute the actual script, script engine 115 may take over, interpreting and executing the script locally within the local runtime context of application 110. Application engine 111 coordinates the changes to spreadsheet 141, ensuring that all modifications are applied correctly and reflected in user interface 113.

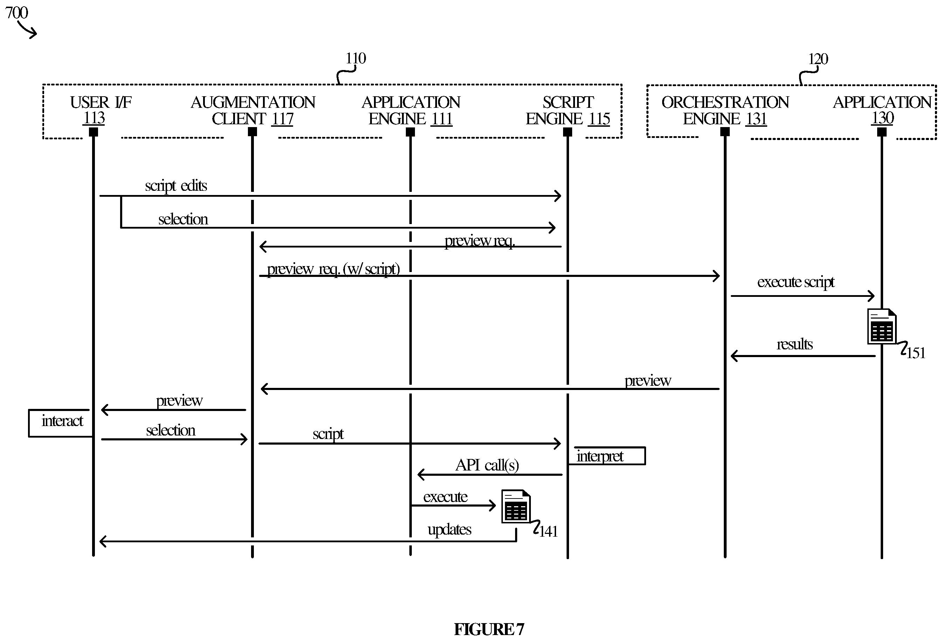

Figure 7 illustrates another operational scenario 700 in an implementation to further highlight the integration between the components of application 110 and the components of augmentation service 120. Specifically, operational scenario 700 a use-case whereby a user desires to preview the outcome of a user-generated script before deploying it live.

In this scenario, the user edits a script via a script editor provided by script engine 115 in cooperation with user interface 113. Upon completing the script, the user may select a button or otherwise invoke a preview feature that causes user interface 113 pass the selection to script engine 115. Script engine 115 responsively communicates with augmentation client 117 to obtain a preview of the script. Alternatively, the selection in user interface 113 may be passed directly to augmentation client 117, bypassing script engine 115. It may be appreciated that, while the components may communicate with each other directly (as shown), they may also communicate indirectly via application engine 111 or some other component or framework.

In either case, augmentation client 110 communicates with orchestration engine 131 (via client interface 133 - not shown) to pass user-generated script with the preview request. Here too, it may be appreciated that augmentation client 110 may communicate directly with client interface 133 or such communication may be facilitated by application engine 111.

Orchestration engine 131 processes the request, coordinating with application 130 to have the script executed against spreadsheet 151. That is, orchestration engine 131 interfaces with application 130 in a runtime context that is isolated form that of application 110 and spreadsheet 141. Application 130, leveraging its own script engine, executes the script with respect to spreadsheet 151, and returns the results of orchestration engine 131.

Upon the script having been executed, orchestration engine 131 may iterate one or more times, for example interfacing with LLM 135 (not shown) to further enhance the script and/or obtain a different script. Alternatively, or eventually, orchestration engine 131 is satisfied with the suggested script and provides it to augmentation client 117 with a preview of an outcome the script. For example, the preview may include a description of changes made to spreadsheet 151 as a result of the script's execution, including textual descriptions, screen shots, and the like.

Augmentation client 117 interacts with user interface 113 to display the preview, either directly or through application engine 111. The user can review the preview and decide whether to proceed with the suggested improvements. If the user chooses to execute the actual script, script engine 115 may take over, interpreting and executing the script locally within the local runtime context of application 110. Application engine 111 coordinates the changes to spreadsheet 141, ensuring that all modifications are applied correctly and reflected in user interface 113.

It may be appreciated that, with respect to operational scenario 600 and operational scenario 700, illustrated in Figure 6 and Figure 7 respectively, application 110 may leverage Component Object Model (COM) APIs to facilitate communication between its components. For example, script engine 115 may use COM APIs to interact with the spreadsheet's cells, ranges, and other objects. These APIs allow the script to perform actions such as updating cell values, applying formulas, and modifying formatting. Application engine 111 coordinates these interactions, ensuring that the script's commands are executed correctly and efficiently.

The communication between application 110 and augmentation service 120 may be supported by RESTful APIs or gRPC. RESTful APIs use HTTP methods (GET, POST, PUT, DELETE) to facilitate communication between the augmentation client 117 and client interface 133 of augmentation service 120. gRPC, on the other hand, provides a high-performance, open-source framework that uses HTTP/2 for transport and protocol buffers as the interface description language. Within application 110, user interface 113 may communicate with application engine using internal APIs or method calls. As mentioned, application engine 111 acts as the central hub, forwarding requests to augmentation client 117 and receiving responses. Script engine 115 interacts with application engine 111 to execute scripts and apply changes to the spreadsheet.

During operational scenario 600 and operational scenario 700, security measures may be in place to ensure that user data is protected. Orchestration engine 131 may perform responsible AI checks and security validations before processing requests. In addition, the isolated execution of scripts in a sandbox environment ensures that the original spreadsheet data remains unaffected until the user approves the changes.

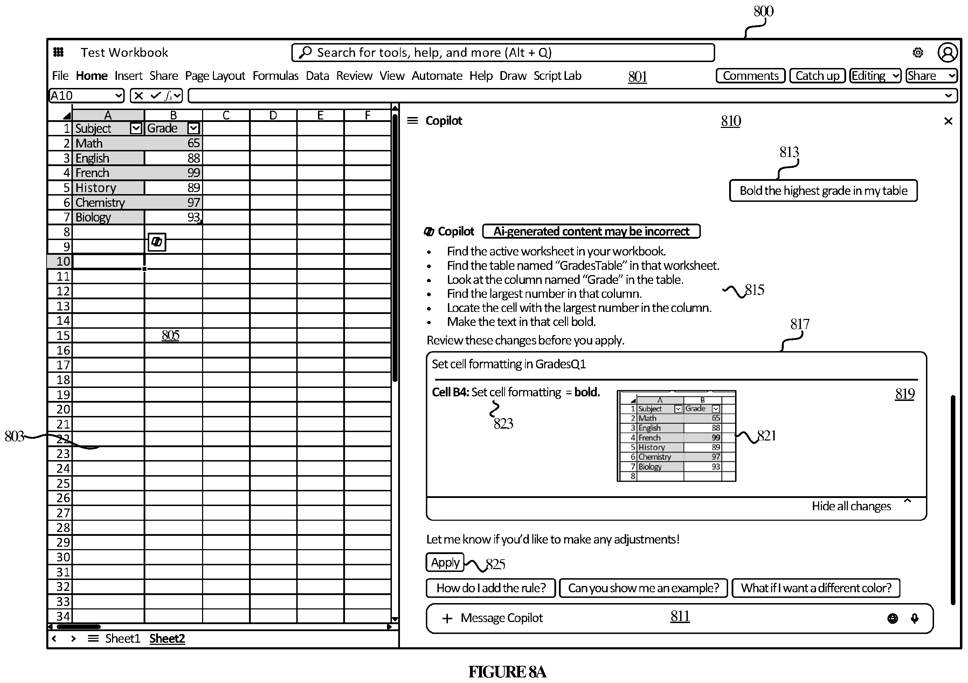

Figures 8A-8E illustrate a user experience 800 in an implementation that demonstrates various applications of the script preview concepts described above. User experience 800 involves a view 800 produced by a user interface to a spreadsheet application (e.g., user interface 113 of application 110). View 800 includes various components that a user may interact with in the context of editing a spreadsheet. Example components include a menu bar 801, a cell grid 803, and a cell 805.

View 800 also includes a side panel 810 for interfacing with an augmentation client (e.g., augmentation client 117 of application 110). Side panel 810 includes an input box 811 for receiving user input in the form of written text strings. A user can input natural language requests in the form of a query, a conversation, or other such formats in an effort to improve their spreadsheet. As discussed above, the user input is communicated via user interface 113 to augmentation client 117, and then to augmentation service 120. Augmentation service 120 generates a preview of a requested improvement and returns the preview to application 110 for the user's consideration in the context of view 800.

In Figure 8A, it is assumed for exemplary purposes that the user previous input a request to "Bold the highest grade in my table," as displayed in text bubble 813. Text bubble 813 is representative of a user interface component suitable for displaying conversational text or other such user input. The request was passed to augmentation service 120, which generated a script for fulfilling the request. Augmentation service 120 also executed the script in an isolated instance of the spreadsheet, thereby allowing it to return a preview of the script outcome.

Here, the preview includes at least two parts: a listing 815 of the steps performed by the generated script, as well as a preview component 817 that details the outcome. Preview component 817 includes a portion 819 that describes in text 823 a specific operation performed on the spreadsheet as a result of the script, as well as visualization 821 of a portion of the cell grid affected by the script. The visualization 821 may be a non-interactive image in some scenarios. Alternatively, visualization 821 may be interactive in that it allows the user to navigate to other portions of the isolated instance of the spreadsheet.

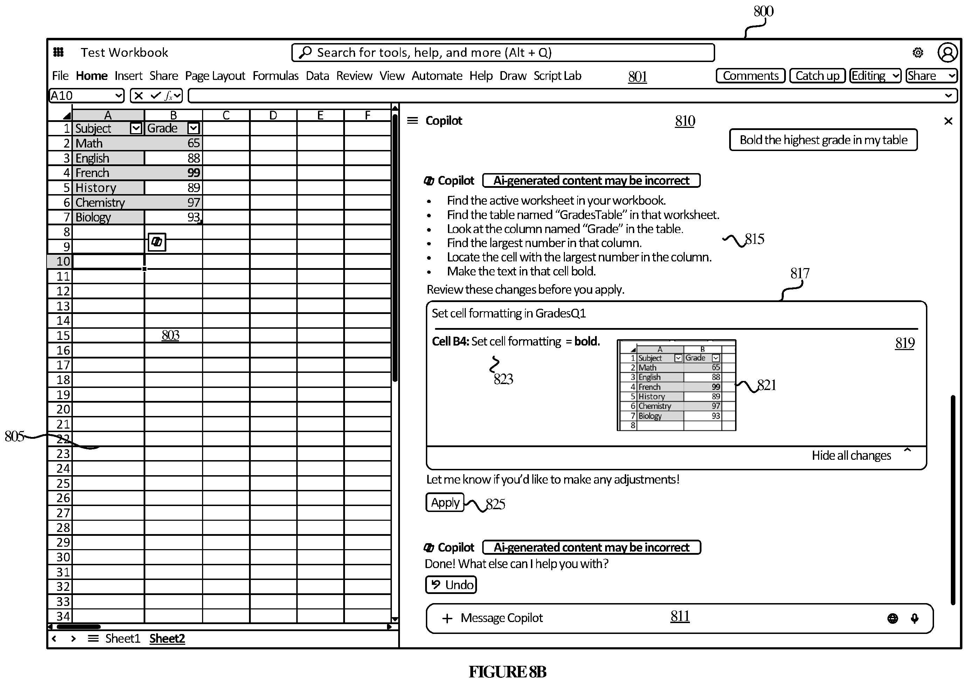

It is assumed for exemplary purposes that the user is satisfied with the script outcome. Accordingly, the user clicks on or otherwise selects button 825 ("Apply"), which causes the application to execute the suggested script on the live version of the spreadsheet. Figure 8B illustrates the result of executing the script live; note that cell B4 is bold.

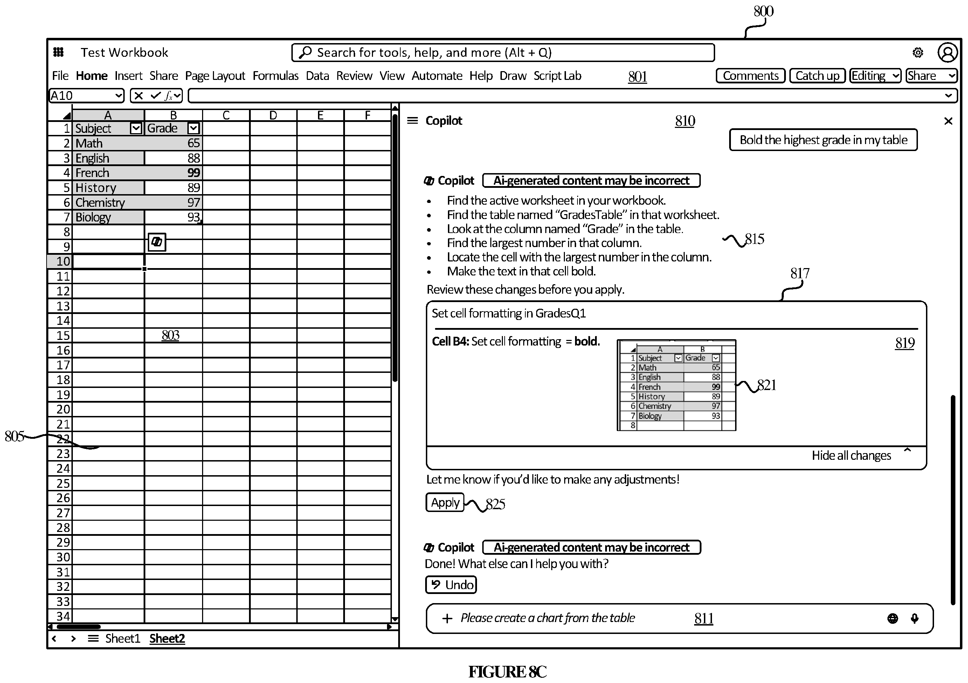

In Figure 8C, user experience 800 continues with the user entering a new request into input box 811 to "Please create a chart from the table." As with the earlier request, the natural language input is forwarded via augmentation client 117 to augmentation serviced 120. Augmentation service 120 processes the input and manages a corresponding workflow to generate an appropriate script. Augmentation service 120 communicates with application 130 to run the script in an isolated fashion, and generates a preview based on the results. The results are returned to application 110, for display via user interface 113 in view 800.

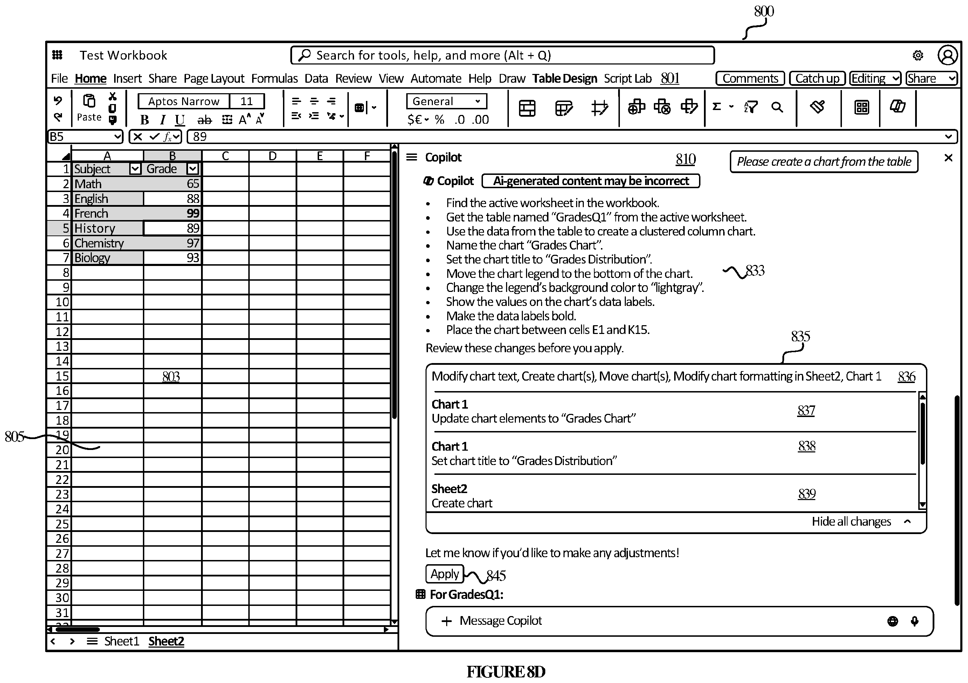

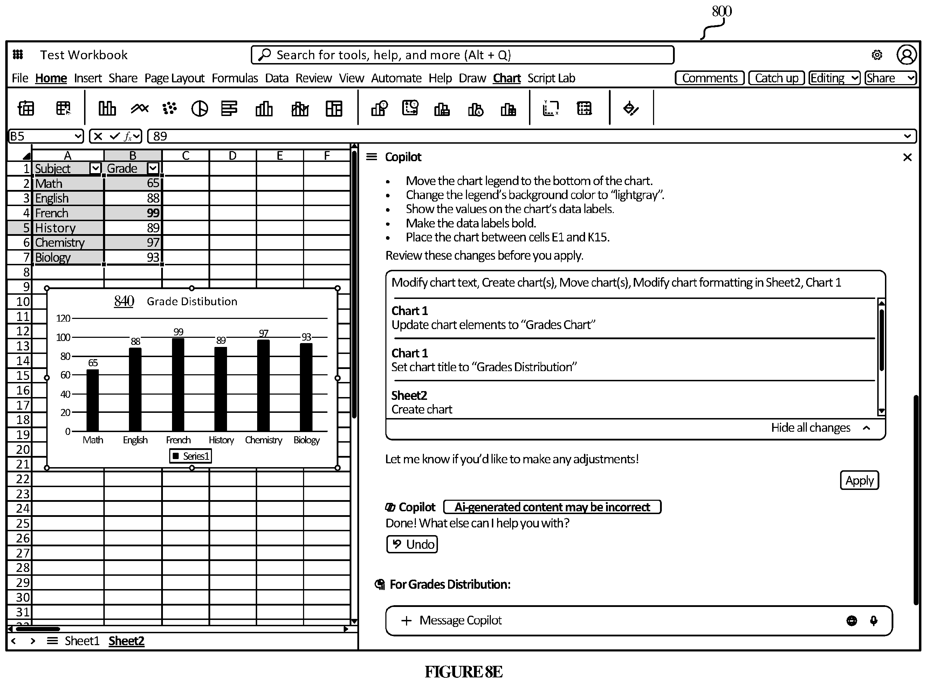

In Figure 8D, side panel 810 again displays the preview. Namely, a listing 833 of the steps involved with the script are displayed, as well as a preview component 835. Preview component 835 includes a first portion 836 that lists various operations that will be performed as a result of the script with respect to spreadsheet and its components. Portion 837, portion 838, and portion 839 further detail changes that will be made to components of the spreadsheet, including a chart (once created) and Sheet2. The user can select button 845 to apply the changes, which causes the application to execute the script with respect to the live version of the spreadsheet. Indeed, Figure 8E illustrates view 800, with the addition of graph 840, which is representative of a chart graphic created in the spreadsheet by virtue of the script.

Figure 9 illustrates computing device 901 that is representative of any device or collection of devices on which the various processes, programs, services, and scenarios disclosed herein may be implemented. Examples of computing device 901 include, but are not limited to, server computers, desktop and laptop computers, tablet computers, mobile phones, audio devices, wearable devices (e.g., headphones, ear buds, eyeglasses, and wrist watches), industrial computers, microcontroller units (MCUs), Internet of Things (IoT) devices, and the like.

Computing device 901 may be implemented as a single apparatus, system, or device or may be implemented in a distributed manner as multiple apparatuses, systems, or devices. Computing device 901 includes, but is not limited to, processing system 902, storage system 903, software 905, communication interface system 907, and user interface system 909. Processing system 902 is operatively coupled with storage system 903, communication interface system 907, and user interface system 909.

Processing system 902 loads and executes software 905 from storage system 903. Software 905 includes and implements process 906, which is representative of the processing methods and processes described above such as preview process 200. When executed by processing system 902, software 905 directs processing system 902 to operate as described herein for at least the various processes, operational scenarios, and sequences discussed in the foregoing implementations. Computing device 901 may optionally include additional devices, features, or functionality not discussed for purposes of brevity.

Referring still to Figure 9, processing system 902 may comprise a microprocessor and other circuitry that retrieves and executes software 905 from storage system 903. Processing system 902 may be implemented within a single processing device but may also be distributed across multiple processing devices or sub-systems that cooperate in executing program instructions. Examples of processing system 902 include general purpose central processing units (CPUs), graphical processing units (GPUs), neural processing units (NPUs), digital signal processors (DSPs), application specific integrated circuits (ASICs), and logic devices, as well as any other type of processing device, circuitry, or combinations and variations thereof.

Storage system 903 may comprise any non-transitory computer readable storage media readable by processing system 902 and capable of storing software 905. Storage system 903 may include volatile and nonvolatile, removable and non-removable media implemented in any method or technology for storage of information, such as computer readable instructions, data structures, program modules, or other data. Examples of storage media include random access memory, read only memory, magnetic disks, optical disks, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations storage system 903 may also include computer readable communication media over which at least some of software 905 may be communicated internally or externally. Storage system 903 may be implemented as a single storage device but may also be implemented across multiple storage devices or sub-systems co-located or distributed relative to each other. Storage system 903 may comprise additional elements, such as a controller, capable of communicating with processing system 902 or possibly other systems.

Software 905 (including process 906) may be implemented in program instructions and among other functions may, when executed by processing system 902, direct processing system 902 to operate as described with respect to the various operational scenarios, sequences, and processes illustrated herein. For example, software 905 may include program instructions for implementing the preview processes described herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 905 may include additional processes, programs, or components, such as operating system software, virtualization software (including virtual machine software and container software), or other such application software. Software 905 may also comprise firmware or some other form of machine-readable processing instructions executable by processing system 902.

In general, software 905 may, when loaded into processing system 902 and executed, transform a suitable apparatus, system, or device (of which computing device 901 is representative) overall from a general-purpose computing system into a special-purpose computing system customized to operate in an optimized manner. Indeed, encoding software 905 on storage system 903 may transform the physical structure of storage system 903. The specific transformation of the physical structure may depend on various factors in different implementations of this description. Examples of such factors may include, but are not limited to, the technology used to implement the storage media of storage system 903 and whether the computer-storage media are characterized as primary or secondary storage, as well as other factors.

For example, if the computer readable storage media are implemented as semiconductor-based memory, software 905 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 907 may include communication connections and devices that allow for communication with other computing systems (not shown) over communication networks (not shown). Examples of connections and devices that together allow for inter-system communication may include network interface cards, antennas, power amplifiers, RF circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

Communication between computing device 901 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of network, or variation thereof. The aforementioned communication networks and protocols are well known and need not be discussed at length here.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Indeed, the included descriptions and figures depict specific embodiments to teach those skilled in the art how to make and use the best mode. For the purpose of teaching inventive principles, some conventional aspects have been simplified or omitted. Those skilled in the art will appreciate variations from these embodiments that fall within the scope of the disclosure. Those skilled in the art will also appreciate that the features described above may be combined in various ways to form multiple embodiments. As a result, the invention is not limited to the specific embodiments described above, but only by the claims and their equivalents.

## Claims

1. A method comprising:
by one or more computing devices (901):
identifying a script associated with a spreadsheet (141) hosted in a runtime environment;
executing the script in a simulation environment (130), isolated from the runtime environment, to produce a simulated outcome (151), wherein the simulated outcome includes one or more changes to an isolated instance of the spreadsheet hosted in the isolated environment;
generating a preview (815, 817) based at least on the simulated outcome, wherein the preview includes a representation of at least one of the one or more changes to the isolated instance of the spreadsheet; and
causing display of the preview of the script.

2. The method of claim 1 wherein identifying the script comprises receiving a request (813) for the preview of the script, wherein the script comprises one of a user-generated script and an artificial intelligence, AI, assistant-generated script.

3. The method of claim 1 wherein identifying the script comprises receiving a request (813) to generate the script, and wherein the method further comprises sending a prompt to a language model (135) to generate the script.

4. The method of any previous claim further comprising sending a prompt to a language model (135) to generate one or more suggestions for modifying the script and including the one or more suggestions in the preview.

5. The method of claim 4 wherein the prompt tasks the language model with reviewing the one or more changes to the isolated instance of the spreadsheet for potentially negative outcomes and wherein the preview includes a representation of at least one of the potentially negative outcomes.

6. The method of any previous claim wherein executing the script in the simulation environment comprises executing allowed operations expressed in the script and blocking disallowed operations expressed in the script.

7. The method of claim 6 wherein the allowed operations include cell updates and formula calculations, and wherein the disallowed operations include network calls and file access operations.

8. One or more computer readable storage media (903) having program instructions (906) stored thereon that, when executed by one or more processors (902) of a computing apparatus (901), direct the computing apparatus to at least:
identify a script associated with a spreadsheet (141) hosted in a runtime environment;
execute the script in a simulation environment (130), isolated from the runtime environment, to produce a simulated outcome (151), wherein the simulated outcome includes one or more changes to an isolated instance of the spreadsheet hosted in the isolated environment;
generate a preview (815, 817) based at least on the simulated outcome, wherein the preview includes a representation of at least one of the one or more changes to the isolated instance of the spreadsheet; and
cause display of the preview of the script.

9. The one or more computer readable storage media of claim 8 wherein, to identify the script, the program instructions direct the computing apparatus to receive a request (813) for the preview of the script, wherein the script comprises one of a user-generated script and an artificial intelligence (AI) assistant-generated script.

10. The one or more computer readable storage media of claim 8 wherein, to identify the script, the program instructions direct the computing apparatus to receive a request (813) to generate the script, and wherein the program instructions further direct the computing apparatus to send prompt to a language model (135) to generate the script.

11. The one or more computer readable storage media of any of claims 8 to 11 wherein the program instructions further direct the computing apparatus to send a prompt to a language model (135) to generate one or more suggestions for modifying the script and include the one or more suggestions in the preview.

12. The one or more computer readable storage media of claim 11 wherein the prompt tasks the language model with reviewing the one or more changes to the isolated instance of the spreadsheet for potentially negative outcomes and wherein preview includes a representation of at least one of the potentially negative outcomes.

13. The one or more computer readable storage media of any of claims 8 to 12 wherein, to execute the script in the simulation environment, the program instructions direct the computing apparatus to executing allowed operations expressed in the script and block disallowed operations expressed in the script.

14. A computing apparatus (901) comprising:
one or more computer readable storage media (903);
one or more processors (902) operably coupled with the one or more computer readable storage media; and
program instructions (906) stored on the one or more computer readable that, when executed by the one or more processors, direct the computing apparatus to at least:
identify a script associated with a spreadsheet (141) hosted in a runtime environment;
execute the script in a simulation environment (130), isolated from the runtime environment, to produce a simulated outcome (151), wherein the simulated outcome includes one or more changes to an isolated instance of the spreadsheet hosted in the isolated environment;
generate a preview (815, 817) based at least on the simulated outcome, wherein the preview includes a representation of at least one of the one or more changes to the isolated instance of the spreadsheet; and
cause display of the preview of the script.

15. The computing apparatus of claim 14 wherein, to identify the script, the program instructions direct the computing apparatus to receive a request (813) for the preview of the script, wherein the script comprises one of a user-generated script and an artificial intelligence (AI) assistant-generated script.
